# EUROPEAN PATENT SPECIFICATION

(11) **EP 3 030 484 B1**
(45) Date of publication and mention of the grant of the patent: **24.05.2023**
(21) Application number: 14834157.1
(22) Date of filing: 05.08.2014
(51) Int. Cl.: B63H 21/17, B63H 23/24, B63H 25/42, H02B 1/015

(54) **DYNAMIC POSITIONING VESSEL**
WASSERFAHRZEUG MIT DYNAMISCHER POSITIONIERUNG
BÂTIMENT À POSITIONNEMENT DYNAMIQUE

(30) Priority: 06.08.2013 NO 20131066; 07.08.2013 GB 201314173
(43) Date of publication of application: 15.06.2016
(73) Proprietor: Kongsberg Maritime AS, 3183 Horten (NO)
(72) Inventor: HIRST, Mike, N-5828 Bergen (NO)
(74) Representative: Acapo AS
(86) International application number: PCT/NO2014/050137
(87) International publication number: WO 2015/020531

(56) References cited:
- EP-A1- 2 442 417
- EP-A1- 2 451 041
- EP-A1- 2 709 229
- EP-A1- 2 916 419
- WO-A1-00/76840
- WO-A1-2008/023988
- WO-A1-2012/175624
- WO-A1-2012/175624
- WO-A1-2013/010577
- GB-A- 2 463 147
- US-A- 4 281 615
- US-A1- 2008 103 632
- US-B1- 6 848 382
- US-B1- 7 806 065

## Description

### Technical Field

The invention relates to high reliability vessels in general and more specifically a system for a dynamic positioning vessel using redundancy zones.

### Background Art

From prior art one should refer to traditional vessels capable of dynamic positioning of IMO class 3 divided into two redundancy zones by a longitudinal bulkhead. The problem is that flooding or fire in one redundancy zone will render half the vessel in-operational. Also splitting the engines into two separate engine rooms adds complexity to the vessel design.

WO 00/76840 A1 "Method for DP-conversion of an Existing Semi-Submersible Rig" presents a method for converting a semi-submersible drilling and accommodation rig into a dynamically positioned vessel where the method includes prefabricating and connecting rig extensions to the rig.

EP2709229 A1 "Power Distribution Systems" presents a power distribution system such as a marine power distribution and propulsion system. The system includes an AC busbar and a plurality of active front end (AFE) power converters. Each AFE power converter includes a first active rectifier/inverter connected to the busbar and a second active rectifier/inverter connected to an electrical load such as an electric propulsion motor. Power sources are connected to the DC link of the AFE power converters.

WO2012175624 A1 «Improvement in Ship Propulsion Engine Fuel Efficiency" presents a propulsion system for a vessel which comprises generator sets, each including a prime mover and a generator, an electric propulsion unit, an energy storage, and a main switchboard. Excess electrical power is stored in the energy storage when the generator produces electric power in excess for the instantaneous needs of the vessel.

### Disclosure of the Invention

### Problems to be Solved by the Invention

Therefore, a main objective of the present invention is to provide an improved system for a high reliability vessel that overcomes the above problems.

It is particularly desirable to overcome the problems relating to the lack of flexibility that comes with the solutions known from prior art.

### Means for Solving the Problem

The objectives are achieved according to the invention by a vessel as defined in the preamble of claim 1, having the features of the characterising portion of claim 1.

In one aspect of the invention an improved system for a high reliability vessel is provided, comprising a plurality of redundancy zones, a thruster system comprising at least two thrusters to create transversal thrust, and a main power supply system comprising a generator system, and a main electrical distribution system comprising a switchboard system, characterized in the vessel further comprises an energy storage system comprising a plurality of energy storage sub systems, wherein at least one of the thrusters with an operatively connected energy storage subsystem is located in a first redundancy zone, and another of the thrusters and the generator system is located outside said first redundancy zone.

The generator system is centralised in a single compartment, in a single redundancy zone.

In an unclaimed solution the energy storage system is centralised. In another unclaimed solution the energy storage system is centralised in a redundancy zone.

In another preferred embodiment the energy storage system comprises a plurality of energy storage subsystems and is decentralised. In a more preferred embodiment the energy storage subsystem is located local to at least one thruster. In an even more preferred embodiment an energy storage subsystem is located local to all thrusters.

In an embodiment the switchboard system is centralised. In a preferred embodiment the switchboard system is centralised in a redundancy zone.

In another preferred embodiment the switchboard system comprises a plurality of switchboard subsystems and is decentralised. In a more preferred embodiment the switchboard system is located local to at least one thruster. In another preferred embodiment the switchboard system is located local to at least one energy storage system.

### Effects of the Invention

The technical effects of the invention are that redundancy is achieved without the use of a longitudinal bulkhead in a vessel and that one can instead use redundancy zones around various parts.

These effects provide in turn several further advantageous effects:
- Generators will not have to be partitioned into more than one separate generator compartment, thus reducing complexity and cost.
- Improved redundancy in that all generators can fail without loss of manoeuvrability.
- Bulkheads can be kept smaller and thus not affect the structural properties of the vessel.
- Bulkheads do not have to reach all the way up to the ceiling but can be kept lower.
- In some embodiments the switchboard does not have to be split
- Redundancy can exceed that of prior art without added complexity.
- Design and structures can be simplified since redundancy zones can group parts having same functionality, e.g. reduced piping for a single generator compartment.
- Provide maximum dynamic positioning capability.

### Brief Description of the Drawings

The above and further features of the invention are set forth with particularity in the appended claims and together with advantages thereof will become clearer from consideration of the following detailed description of an exemplary embodiment of the invention given with reference to the accompanying drawings.

The invention will be further described below in connection with exemplary embodiments which are schematically shown in the drawings, wherein:
Fig. 1 shows a vessel according to prior art
Fig. 2 shows a vessel wherein a generator system is enclosed in a redundancy zone
Fig. 3 shows a vessel wherein generator system and energy storage system are enclosed in separate redundancy zones
Fig. 4 shows an embodiment of the present invention with local energy storage subsystems and comprising a switchboard similar to that of prior art, wherein the generator system is located in a redundancy zone
Fig. 5 shows an embodiment of the present invention with local energy storage subsystems without a switchboard
Fig. 6 shows an embodiment of the present invention with local energy storage subsystems and comprising local switchboard subsystems
Fig. 7 shows an embodiment of the present invention with local energy storage subsystems and comprising a switchboard similar to that of prior art

### Description of the Reference Signs

The following reference numbers and signs refer to the drawings:

| **Ref.** | **Item** |
|---|---|
| G | Generator system or sub system |
| S | Switchboard, switchboard subsystem |
| E | Energy storage system or subsystem |
| T | Thruster |

Redundancy zones are indicated by enclosure in dashed lines.

### Detailed Description

An underlying principle of a high reliability vessel is that functions are divided into redundancy zones, wherein total loss of one zone should not prevent the vessel from operating, at least within a defined performance envelope that also comprises operational time in degraded mode. For IMO class 3 there is a requirement that loss of position is not to occur in the event of a single fault in any component or system including fire and flooding.

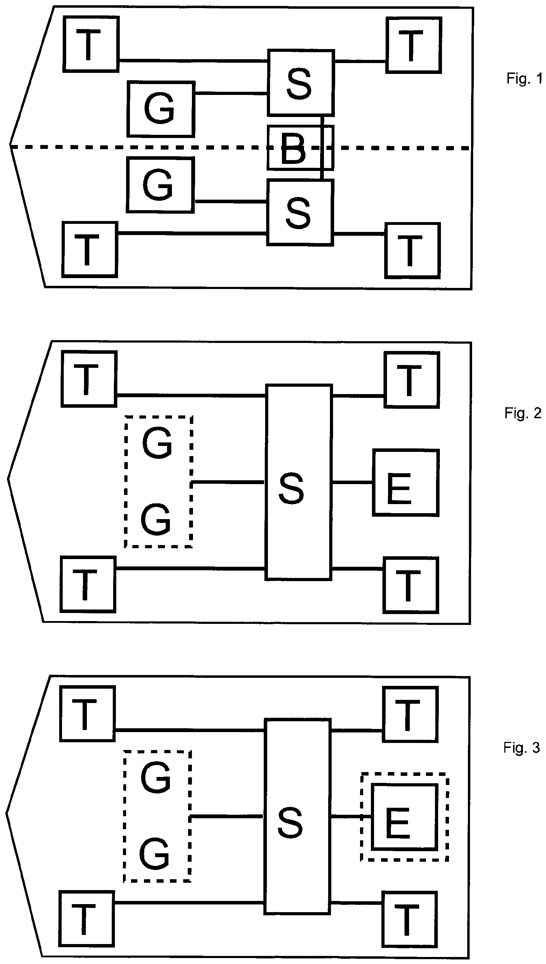

For comparison, Fig. 1 shows a vessel according to prior art, wherein the vessel is divided into two redundancy zones by a longitudinal bulkhead. Loss of one side will allow the other side to maintain operations. Single failure criteria comprise:
- Any static component or system (generators, thrusters, switchboards, remote controlled valves etc.)
- Any normally static component (cables, pipes, manual valves etc.)
- All components in any one watertight compartment, from fire or flooding
- All components in any one fire sub-division, from fire or flooding.

It should be noted that in this design the switchboard is split into two switchboard subsystems connected with a bus tie. When operating in redundancy mode the bus tie is kept open to achieve electrical isolation between the two zones.

A generator system typically comprises at least one engine driving a generator. For redundancy and/or the ability to deliver sufficient power, the generator system comprises a plurality of engines, each driving a generator. Each generator is in turn connected to the switchboard system.

### Principles forming the basis of the invention

An underlying principle of the present invention is that when one part is enclosed in a compartment in redundancy zone, there is actually a second implied redundancy zone defined by the area outside the compartment and within the hull of the ship. Throughout this disclosure a redundancy zone means an enclosed area unless otherwise stated, nevertheless the implied redundancy zone should always be kept in mind for failure mode analysis.

Fig. 2 shows a vessel wherein a generator system is enclosed in a redundancy zone. It should be noted that placing an energy storage system in a redundancy zone is also within the ambit of this basic embodiment, as is having both parts, i.e. generator system and energy storage system, enclosed in separate redundancy zones as shown in Fig. 3. Should one or the other of said parts be lost the vessel can draw energy from the part not lost and operate with all thrusters. This embodiment has some limitations such that a loss of the implied redundancy zone will lead to the vessel no longer being operational.

Placing the generator system in a single compartment in a redundancy zone has many advantages e.g. in that fuel, exhaust, cooling and power lines can be kept close together, significantly reducing complexity. The generator system with flammable fuel, high temperature and high power electric system represents many entries into various failure modes that can result in loss. A separate energy storage system outside the single engine compartment will overcome such a loss.

The energy storage system represents electrical power at standby, ready to use should the generator system fail. It can be embodied by a single accumulator or battery system or by a plurality of accumulators or batteries that are separately fused for improved reliability.

The present invention allows for many embodiments for the energy storage system. It is possible to use centralised as well as decentralised energy storage systems. It is found that placing energy storage system local to all thrusters, wherein the local energy storage system and the respective thruster is compartmentalised in a redundancy zone provides particularly high reliability. In such a system the worst case single failure is loss of a single thruster which is a significant improvement over the loss of half of the power system and half of the thrusters in prior art configurations.

Fig. 2 shows such a system wherein each thruster redundancy zone receives power through a switchboard. In normal mode the thruster is powered by the generator system providing power through the switchboard. Also the energy storage system can be recharged or trickle charged and maintained by the same provided power. In case of failure wherein provided power fails, due to failure in the generator system, the switchboard or other reasons, emergency power is fed from the energy storage system into the thruster.

Local power makes it also possible to combine provided power from the generator system e.g. with boost energy from the energy storage system for emergency situation, requiring extra large amounts of power. Having local energy storage makes it simpler to draw extra thick power cables for such peak power.

With local power it will also be possible to operate thrusters without powering up and operating the entire system.

The switchboard system routes power from the generator system to the thrusters and the energy storage system. In prior art as shown in Fig.1 the switchboard system is divided into 2 subsystems connected with a bus tie. The divided switchboard system with bus tie represents added complexity that is no longer required according to the present invention for all embodiments.

The present invention allows for many embodiments of the switchboard system. It is possible to use centralised as well as decentralised switchboard system.

In the vessels shown in Fig. 2 and Fig. 3, the switchboard system connects to the generator system and also the energy storage system. Thus the switchboard system has to be able to route power from the generator system to the thrusters and preferably also be able to route power when charging and receiving power from the energy storage system.

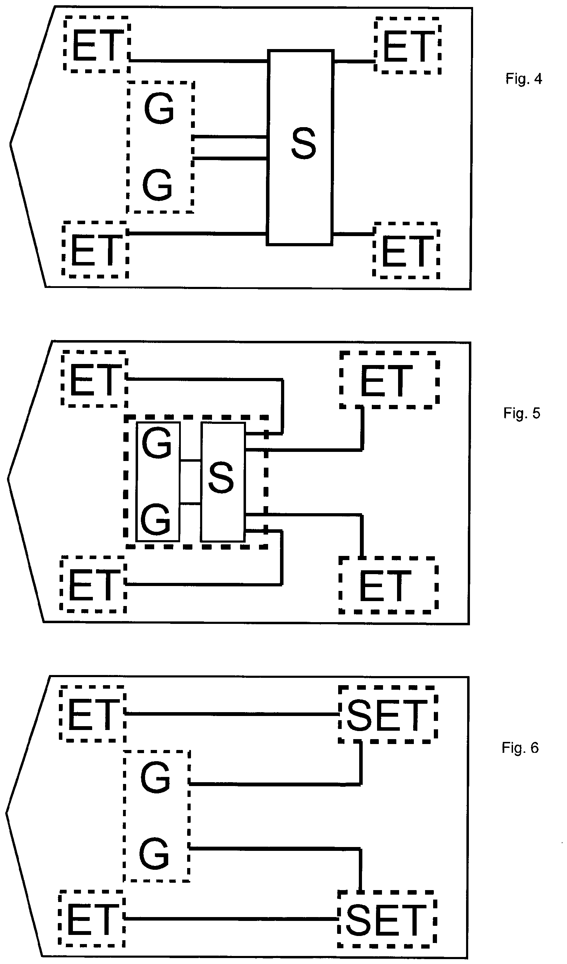

In the embodiment shown in Fig. 4 the switchboard delivers power for charge and discharge of the energy storage system taking place in the thruster zones.

In the embodiment shown in Fig. 5 the switchboard is distributed between 2 of the thruster zones. This allows a compact solution for the distribution panel in the thruster zones but also adds some complexity in that the switchboard subsystems also have to feed another thruster zone. Also having the switchboard subsystems in redundancy zones can improve availability.

The bus tie provides means for connecting and disconnecting switchboard subsystems in a switchboard system. Under certain operations such as IMO class 3 it is mandated to be in a disconnected state.

### Best Modes of Carrying Out the Invention

The embodiment of the apparatus according to the invention shown in Fig. 4 and 5 comprises a single engine room in a redundancy zone and an energy storage subsystem local to each thruster wherein each thruster is in separate redundancy zones together with respective energy storage subsystem. Thus any single redundancy zone can fail without loss of operational capability. In fact a single failure will leave maximum one thruster unavailable, a clear improvement over prior art where one half of the ship can fail. This embodiment can take on further variations.

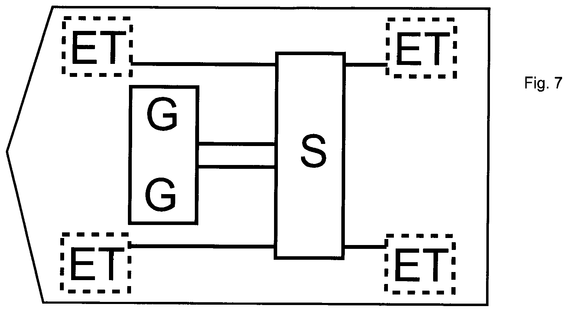

Fig. 4 shows a system comprising a switchboard similar to that of prior art. When operating in IMO class 3 mode a bus tie inside the switchboard is kept open and each switchboard subsystem is powered separately from the generator system. This has the advantage of operating flexibility between IMO class 3 mode and a non-IMO class 3 mode with lower running costs by operating fewer engines to drive the generators. The system also negates the requirement to have generators capable of double the power required for dynamic positioning operating associated with the baseline design in order to have sufficient power available following a single failure. Operating fewer engines at higher load has both fuel consumption and emissions benefits. Generators can be in a redundancy zone as shown in Fig. 4 or not in a separate redundancy zone as shown in Fig. 7

Fig. 5 shows an embodiment with a switchboard co-located with the generators, where separate power cables from the single engine room feed each thruster redundancy zone. This has the advantage of simplicity.

These modes should comply with IMO class 3 requirements.

It is preferred that the fire-proof sub-divisions are implemented according to the A60 standard.

### Alternative Embodiments

A number of variations on the above can be envisaged. For instance one can use a hybrid system where the switchboard system is split into switchboard subsystems that are local to at least two thruster redundancy zones.

Fig. 6 shows such an embodiment wherein the switchboard subsystems route power from the generator system to the redundancy zone local to the switchboard subsystem as well as to other thruster redundancy zones.

Fig. 2 and 3 show a single cable from the single engine room and from the energy storage unit. Nevertheless one can also envisage a system where there instead are two cables from these, where a first cable from a first group of engines and a first cable from a first part of the energy storage system are connected to a first switchboard subsystem and a second cable from a second group of engines and a second cable from a second part of the energy storage system are connected to a second switchboard subsystem. A bus tie can be provided to selectively connect the first and second switchboard subsystems.

It is also within the scope of the invention to also provide a thruster in the single engine compartment embodiment, also when this single engine compartment is a redundancy zone.

It is also possible to provide a redundancy zone having an energy storage unit and a thruster further comprising a sub division between the energy storage system and the thruster. Said sub division can be provided to avoid fumes mixing, or to provide extra barrier against fire or flooding. Such divided compartments still provide the same effect as a normal redundancy zone and thus still fall within the ambit of the invention.

### Industrial Applicability

The invention according to the application finds use in high reliability vessel with improved capability in case of single and multiple point of failure.

## Claims

1. A dynamic positioning vessel comprising:
a plurality of redundancy zones, wherein each redundancy zone is in a separate enclosed area,
a thruster system comprising at least two thrusters (T) to create transversal thrust, and
a main power supply system comprising:
a generator system (G), and
a main electrical distribution system comprising a switchboard system (S),
**characterized in that**
the vessel further comprises an energy storage system (E) comprising a plurality of energy storage subsystems, where the energy storage system represents electrical power at standby, ready to use,
wherein at least one of the thrusters is operatively connected to a first of the plurality of energy storage subsystems, and the at least one thruster and the operatively connected energy storage subsystem are located in a first redundancy zone, and another of the thrusters and the generator system are located outside said first redundancy zone, and the generator system (G) is located in a single compartment in a single redundancy zone.

2. The dynamic positioning vessel according to claim 1, wherein the first redundancy zone comprises a sub division between the first energy storage subsystem and the at least one thruster.

3. The dynamic positioning vessel according to claim 1-2, wherein an energy storage sub-system is located local to all thrusters.

4. The dynamic positioning vessel according to claim 1-3, wherein each thruster is in a separate redundancy zone together with a respective energy storage subsystem.

5. The dynamic positioning vessel according to claim 1, wherein the switchboard system is centralised.

6. The dynamic positioning vessel according to claim 5, wherein the switchboard system is centralised in a redundancy zone.

7. The dynamic positioning vessel according to claim 1, wherein the switchboard system comprises a plurality of switchboard subsystems and is decentralised.

8. The dynamic positioning vessel according to claim 7, wherein the switchboard system is located local to at least one thruster of the thrusters.

9. The dynamic positioning vessel according to claim 7, wherein the switchboard system is located local to at least one energy storage system.

10. The dynamic positioning vessel according to claim 1, wherein the single compartment further comprises a thruster.

11. Use of a dynamic positioning vessel according to claims 1 - 9, wherein the vessel is operated according to regulation requiring that loss of position is not to occur in the event of a single fault in any component or system, including fire and flooding.

## Patentansprüche

1. Dynamisches Positionierungswasserfahrzeug, mit:
mehreren Redundanzzonen, wobei jede Redundanzzone sich in einem separaten geschlossenen Bereich befindet,
einem Strahlrudersystem, dass mindestens zwei Strahlruder (T) umfasst, um eine transversale Schubkraft zu erzeugen, und
einem Hauptstromversorgungssystem, umfassend:
ein Generatorsystem (G), und
ein elektrisches Hauptverteilungssystem mit einem Schaltanlagensystem (S),
**dadurch gekennzeichnet, dass**
das Wasserfahrzeug ferner ein Energiespeichersystem (E) aufweist, das mehrere Energiespeicher-Subsysteme umfasst, wobei das Energiespeichersystem verwendungsbereite elektrische Energie im Bereitschaftszustand darstellt,
wobei mindestens eines der Strahlruder betriebsfähig mit einem ersten der mehreren Energiespeicher-Subsysteme verbunden ist und das mindestens eine Strahlruder und das betriebsfähig verbundene Energiespeicher-Subsystem in einer ersten Redundanzzone angeordnet sind, und ein weiteres der Strahlruder und das Generatorsystem sich außerhalb der ersten Redundanzzone befinden und das Generatorsystem (G) in einem einzigen Abteil einer einzigen Redundanzzone untergebracht ist.

2. Dynamisches Positionierungswasserfahrzeug nach Anspruch 1,
wobei die erste Redundanzzone eine Unterteilung zwischen dem ersten Energiespeicher-Subsystem und dem mindestens einen Strahlruder aufweist.

3. Dynamisches Positionierungswasserfahrzeug nach Anspruch 1 - 2,
wobei ein Energiespeicher-Subsystem nahe jedem Strahlruder angeordnet ist.

4. Dynamisches Positionierungswasserfahrzeug nach Anspruch 1 - 3,
bei dem sich jedes Strahlruder zusammen mit einem zugehörigen Energiespeicher-Subsystem in einer separaten Redundanzzone befindet.

5. Dynamisches Positionierungswasserfahrzeug nach Anspruch 1,
wobei das Schaltanlagensystem zentralisiert ist.

6. Dynamisches Positionierungswasserfahrzeug nach Anspruch 5,
bei dem das Schaltanlagensystem in einer Redundanzzone zentralisiert ist.

7. Dynamisches Positionierungswasserfahrzeug nach Anspruch 1,
wobei das Schaltanlagensystem mehrere Schaltanlagensubsysteme umfasst und dezentralisiert ist.

8. Dynamisches Positionierungswasserfahrzeug nach Anspruch 7,
wobei das Schaltanlagensystem in der Nähe mindestens eines Strahlruders der Strahlruder angeordnet ist.

9. Dynamisches Positionierungswasserfahrzeug nach Anspruch 7,
wobei das Schaltanlagensystem in der Nähe mindestens eines Energiespeichersystems angeordnet ist.

10. Dynamisches Positionierungswasserfahrzeug nach Anspruch 1,
wobei das einzelne Abteil ferner ein Strahlruder umfasst.

11. Verwendung eines dynamischen Positionierungswasserfahrzeug nach Anspruch 1 - 9,
wobei das Wasserfahrzeug gemäß einer Vorschrift betrieben wird, die verlangt, dass kein Positionsverlust im Falle eines einzelnen Fehlers in jeglicher Komponente oder jeglichem System, einschließlich Feuer und Überflutung, auftritt.

## Revendications

1. Bâtiment à positionnement dynamique comprenant :
une pluralité de zones de redondance, dans lequel chaque zone de redondance est dans un espace enfermé séparé,
un système propulseur comprenant au moins deux propulseurs (T) pour créer une propulsion transversale, et
un système d'alimentation en puissance principale comprenant :
un système générateur (G), et
un système de distribution électrique principale comprenant
un système de tableau de commutation (S),
**caractérisé en ce que**
le bâtiment comprend en outre un système de stockage d'énergie (E) comprenant une pluralité de sous-systèmes de stockage d'énergie, où le système de stockage d'énergie représente une puissance électrique en veille, prête à l'emploi,
dans lequel au moins un des propulseurs est raccordé de manière opérationnelle à un premier de la pluralité de sous-systèmes de stockage d'énergie, et l'au moins un propulseur et le sous-système de stockage d'énergie raccordé de manière opérationnelle sont situés dans une première zone de redondance, et un autre des propulseurs et le système générateur sont situés à l'extérieur de ladite première zone de redondance, et le système générateur (G) est situé dans un compartiment unique dans une zone de redondance unique.

2. Bâtiment à positionnement dynamique selon revendication 1, dans lequel la première zone de redondance comprend une subdivision entre le premier sous-système de stockage d'énergie et l'au moins un propulseur.

3. Bâtiment à positionnement dynamique selon revendication 1 - 2, dans lequel un sous-système de stockage d'énergie est situé localement par rapport à tous les propulseurs.

4. Bâtiment à positionnement dynamique selon revendication 1 - 3, dans lequel chaque propulseur est dans une zone de redondance séparée conjointement à un sous-système de stockage d'énergie respectif.

5. Bâtiment à positionnement dynamique selon revendication 1, dans lequel le système de tableau de commutation est centralisé.

6. Bâtiment à positionnement dynamique selon revendication 5, dans lequel le système de tableau de commutation est centralisé dans une zone de redondance.

7. Bâtiment à positionnement dynamique selon la revendication 1, dans lequel le système de tableau de commutation comprend une pluralité de sous-systèmes de tableau de commutation et est décentralisé.

8. Bâtiment à positionnement dynamique selon revendication 7, dans lequel le système de tableau de commutation est situé localement par rapport à au moins un propulseur des propulseurs.

9. Bâtiment à positionnement dynamique selon revendication 7, dans lequel le système de tableau de commutation est situé localement par rapport à au moins un système de stockage d'énergie.

10. Bâtiment à positionnement dynamique selon revendication 1, dans lequel le compartiment unique comprend en outre un propulseur.

11. Utilisation d'un bâtiment à positionnement dynamique selon revendication 1 - 9, dans lequel le bâtiment fonctionne selon une régulation nécessitant qu'une perte de position ne se produise pas dans l'éventualité d'une défaillance unique dans un quelconque composant ou système, incluant un incendie et une inondation.
